# EUROPEAN PATENT APPLICATION

(11) **EP 2 353 987 A1**
(43) Date of publication of application: **10.08.2011**
(21) Application number: 10380143.7
(22) Date of filing: 30.11.2010
(51) Int. Cl.: B62M 1/04, F16H 19/04, F16H 19/06, F16H 31/00

(54) **Optimizer transforming a linear movement into circular movement**

(30) Priority: 01.12.2009 ES 200902288
(71) Applicant: Jorge Victorino Pastrana Molleda, 34005 Palencia (ES)
(72) Inventor: Jorge Victorino Pastrana Molleda, 34005 Palencia (ES)

(57) **Abstract**

Summary: Optimizer transforming a linear reciprocating movement into circular movement. Mechanism of transmission and transformation of linear motion generated by two elements (1,1b) that perform alternative movements back and forth in a twisting motion in one direction. The linear movement executed on two toothed guides (1,1b) produce rotational movement of alternating direction on a ring gear (2), the rotational movement of alternating direction is transformed into a spinning one way, through a transmission mechanism that is in a box or container (13). Such transmission consists of two parallel shafts (8,9) and two freewheels;
A perpendicular shaft (3) is rotated with the reciprocating movement of two racks (1,1b) on a gear (2).
At the other end of this shaft (3) another gear (4) will engage one of the pinions (5,6). The pinions (5,6) with a freewheel will rotate the output shaft (9) accordingly in one single direction.

## Description

### BACKGROUND:

Noting that as in the example of the bicycle, even if the same constant force at all points of the circle described by the pedals, not being the force tangential to the circumference, the torque exerted on the shaft is less than optimal we could achieve if the force is always applied in a tangential direction.

### DESCRIPTION:

The present invention relates to a mechanical transmission that transforms a linear propulsion of two elements alternating in a twisting motion in one direction in which the force exerted by these two elements alternating turns without loss, except for those caused by the transmission itself, in a pair of rotation. The description presented is a proposed practical example and does not restrict all cases to which the invention could be applied.

The transmission mechanism consists of two toothed guides (1) and (1b) that transmit linear motion to a gear outside via a zipper mechanism (2). The central gear (2) is attached through a shaft (3) with another gear (4) which is inside the box or container (13) and containing the items listed below Gear (4). Gear (4) geared with the pinion (5). The pinion (5) transmits the motion through a belt or chain (7) to another gear (6) and gear (10) through a shaft (8) in the event that either phone (1) the transmitting the movement and restricting the movement if it was the guide (1b) that do so. On the other side of the pinion (6) transmits motion to the gear (11) through a shaft (9) in case it is the guide (1b) that transmit the movement and restricting the movement if it does the guide (1). Gear (11) transmitted through the shaft (9) the movement of the crown / pulley (12) that turns in the same way regardless of the direction of movement of the guides (1) and (1b), as the pine (5) and (6) are sprocket free wheel mechanism.

It can be assumed that the guides and the gear must slide or rotate, depending on the case, with the least friction possible to not compromise the slip, even incorporating auxiliary bearings to facilitate it, and can be used commercial parts. It is also desirable that the bearings, auxiliary bearings, ratchets and crowns can be easily obtained on the commercial and independent transmission elements can be chosen from among the commercials chains or belts.

### OPERATION:

The propulsion of the guides, alternately, so that when one makes the movement back, the other makes it back.

### First movement:

By pressing toothed guide (1), it transmits a rotation to gear (2) through a zipper mechanism which in turn transmits the rotation to gear (4) by shaft (3) that lies between the gears (2) and (4). Gear (4) transmits the rotation to gear (5), which transmits motion to the gear (6) by a chain or belt (7), the number (6) in this regard is in neutral (no work) while the gear (5) rotated by the shaft (8) to gear (10), and this in turn to the gear (11) with which is geared directly. Gear (11) transmits the movement to the crown / pulley (12) from which comes the final rotation applicable to any mechanism that requires it.

### Second movement:

When you push down on the other guide wheel (1b) is shifted by rotating the gear (2) opposite to the first movement as you return to the toothed guides (1) to its initial position (to start again the first movement). In this second movement is the pinion (5) which is at a standstill, with the pinion (6) which now transmits the movement through the shaft (9) rotates the gear (11) and turn the crown / pulley (12) in the same way as in the first movement from which would go through a belt, chain, or other rotation system followed any applicable to any mechanical system that requires it, noting that although the movements of the toothed guides (1 and 1b) are opposites, the rotation of the crown / pulley (12) always occurs in the same direction.

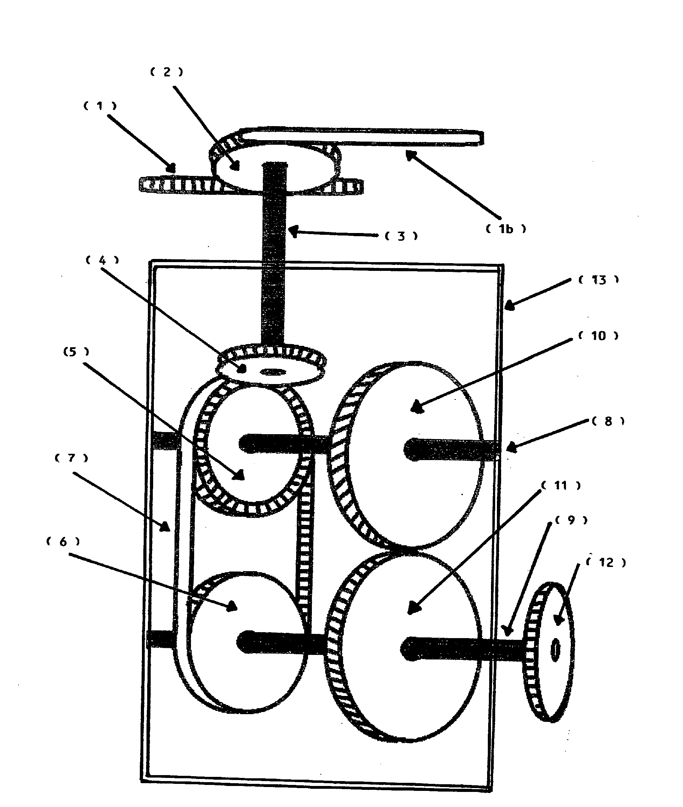

## Claims

1. Optimizer transforming a linear movement comprising circular transmission mechanism that turns the drive gear engaged two guides (1) and (1b) that transmit linear motion to a gear outside via a zipper mechanism (2). The central gear (2) is attached through a shaft (3) with another gear (4) which is inside the box or container (13) and containing the items listed below Gear (4). Gear (4) geared with the pinion (5). The pinion (5) transmits the motion through a belt or chain (7) to another gear (6) and gear (10) through a shaft (8) in the event that either phone (1) the transmitting the movement and restricting the movement if it was the guide (1b) that do so. On the other side of the pinion (6) transmits motion to the gear (11) through a shaft (9) in case it is the guide (1b) that transmit the movement and restricting the movement if it does the guide (1). Gear (11) transmitted through the shaft (9) the movement of the crown / pulley (12) that turns in the same way regardless of the direction of movement of the guides (1) and (1b), as the pine (5) and (6) are sprocket free wheel mechanism.

2. Optimizer transforming a circular linear movement, much of the mechanism is in a box or container (13) in which they were housed crowns (4), (10) and (11), pine (5 ) and (6), chain or belt (7) and the part of those shafts that transmit movement between the elements that are inside (8) and (9) with the other elements found outside the box or container (13).

3. Optimizer transforming a linear movement wherein it circular sprockets (5) and (6) consist of two freewheel to ratchet and sprocket shaft allowing a free rotation in one direction and be engaged in and transmitting reverse torque.
